# EUROPÄISCHE PATENTSCHRIFT

(11) **EP 3 433 038 B1**
(45) Veröffentlichungstag und Bekanntmachung des Hinweises auf die Patenterteilung: **27.11.2019**
(21) Anmeldenummer: 17708498.5
(22) Anmeldetag: 02.03.2017
(51) Int. Cl.: B22D 11/115, B22D 11/12, B22D 11/041, B22D 11/043, B22D 11/14

(54) **EINEN METALLSTRANG PARTIELL UMGREIFENDE RÜHRSPULE**
STIRRING COIL WHICH PARTLY SURROUNDS A METAL STRAND
BOBINE D'AGITATION ENTOURANT EN PARTIE UNE BILLETTE MÉTALLIQUE

(30) Priorität: 21.03.2016 AT 502302016
(43) Veröffentlichungstag der Anmeldung: 30.01.2019
(73) Patentinhaber: Primetals Technologies Austria GmbH, 4031 Linz (AT)
(72) Erfinder: KOGLER, Hans-Peter, 4050 Traun (AT); THOENE, Heinrich, 4020 Linz (AT)
(74) Vertreter: Metals@Linz
(86) Internationale Anmeldenummer: PCT/EP2017/054961
(87) Internationale Veröffentlichungsnummer: WO 2017/162418

(56) Entgegenhaltungen:
- EP-A1- 2 127 783
- WO-A1-2007/073863
- WO-A2-2013/174512
- CN-Y- 201 405 047
- JP-A- H07 108 355
- US-A- 4 834 168
- US-B2- 7 828 043

## Beschreibung

Die vorliegende Erfindung geht aus von einer Rührspule in einer Stranggießanlage, mittels derer in einer Gießrichtung ein Metallstrang gegossen wird,
- wobei die Rührspule eine Anzahl n von Segmenten aufweist, die den Metallstrang in einer orthogonal zur Gießrichtung verlaufenden Schnittebene gesehen jeweils über einen Teilumfang umgeben,
- wobei die Segmente jeweils mehrere Spulenanordnungen aufweisen, die in der Schnittebene gesehen sequenziell aufeinanderfolgen,
- wobei die Segmente jeweils als Teilkreisbogen ausgebildet sind.

Die vorliegende Erfindung geht weiterhin aus von einer Stranggießanlage,
- wobei die Stranggießanlage eine Kokille und eine der Kokille nachgeordnete Strangführung aufweist,
- wobei die Stranggießanlage weiterhin eine derartige Rührspule aufweist, die im Bereich der Kokille und/oder der Strangführung angeordnet ist.

Die vorliegende Erfindung geht weiterhin aus von einem Betriebsverfahren für eine derartige Rührspule.

Eine derartige Rührspule ist aus der WO 2013/174 512 A2 bekannt. Auch der US 4 834 168 A und der EP 2 127 783 A1 sind derartige Rührspulen zu entnehmen.

Rührspulen für Stranggießanlagen sind weit verbreitet. Mittels der Rührspulen wird der noch flüssige Kern des gegossenen Metallstranges beeinflusst, so dass er in Bewegung versetzt wird.

In Kapitel 10 "Electromagnetic Methods for Continuous Casting" des Fachbuchs "The Making, Shaping, and Treating of Steel", 11. Ausgabe, AISE, 2003 werden zwei grundlegende Ausgestaltungen derartiger Rührspulen beschrieben. Zum einen ist dort erläutert, dass rotatorische Rührspulen bekannt sind, die den gegossenen Metallstrang umgeben und wie der Stator einer rotatorischen Asynchronmaschine wirken. Derartige Rührspulen versetzen den flüssigen Kern in eine rotatorische Bewegung um eine Achse, die parallel zur Gießrichtung gerichtet ist. Zum anderen sind lineare Rührspulen bekannt, die nur auf einer Seite an den gegossenen Metallstrang angestellt sind. Diese Rührspulen wirken wie der Stator einer linearen Asynchronmaschine. Sie versetzen den flüssigen Kern in eine Bewegung, die in einem Bereich in Gießrichtung gerichtet ist und in einem anderen Bereich entgegen der Gießrichtung gerichtet ist. Die "Rotation" erfolgt in diesem Fall um eine Achse, die in einer zur Gießrichtung orthogonalen Ebene verläuft.

In der Regel werden Rührspulen der erstgenannten Bauart bevorzugt, weil die Rotation des flüssigen Kerns um eine parallel zur Gießrichtung orientierte Achse technologisch vorteilhafter ist.

Rührspulen, welche den gegossenen Metallstrang vollständig umschließen, können auf effiziente Weise den noch flüssigen Kern in Rotation versetzen. Hierzu ist es jedoch erforderlich, dass die Spulenanordnungen der Rührspule einen geringen Abstand von dem gegossenen Metallstrang aufweisen, da anderenfalls der magnetische Widerstand im Luftspalt zwischen den Spulenanordnungen der Rührspule und dem gegossenen Metallstrang sich nachteilig bemerkbar macht.

Mittels Stranggießanlagen sollen oftmals Metallstränge mit verschiedenen Gießformaten gegossen werden, beispielsweise mit einem Knüppelquerschnitt zwischen 100 x 100 mm und 250 x 250 mm oder einem Vorblockquerschnitt zwischen 150 x 150 mm und 400 x 400 mm. Wenn in diesem Fall stets ein und dieselbe Rührspule verwendet wird, muss die Rührspule für den Maximalquerschnitt ausgelegt sein. Für Metallstränge mit einem kleineren Querschnitt hat dies zur Folge, dass der Abstand der Rührspule vom Metallstrang größer als technologisch erforderlich ist. Daher werden oftmals - je nach Querschnitt des gegossenen Metallstranges - verschiedene Rührspulen verwendet. Das Abbauen der bisher verwendeten Rührspule und das Anbauen der neu zu verwendenden Rührspule sind jedoch sehr arbeitsintensiv und zeitaufwändig. Ferner müssen mehrere Rührspulen vorgehalten werden.

Ein weiteres Problem besteht oftmals darin, dass die Rührspule in einem Bereich der Stranggießanlage angeordnet werden soll, in dem sich bereits andere Elemente der Stranggießanlage befinden, beispielsweise Fußrollen oder Spritzregister. Dadurch vergrößert sich der von der Rührspule zu umbauende Raum noch weiter. Ein weiteres Problem besteht darin, dass eine Rührspule, die den Metallstrang vollständig umgibt, nicht vom Metallstrang weg bewegt werden kann. Dies ist insbesondere im Falle eines Kokillendurchbruchs oder bei Umbauten von Nachteil.

Aus der AT 513 066 A1 ist eine Rührspule bekannt, welche Flussleitelemente aufweist. Bei dieser Rührspule kann die Rührspule selbst unabhängig vom Querschnitt des gegossenen Metallstranges unverändert verwendet werden. Es müssen jedoch - je nach Querschnitt des gegossenen Metallstranges - die Flussleitelemente eingebaut, ausgebaut oder zumindest positioniert werden.

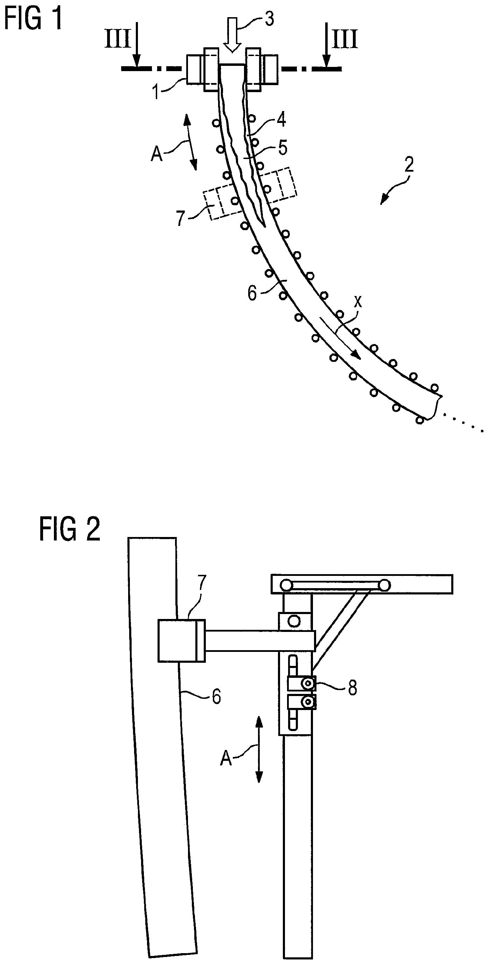

Bei der aus der WO 2013/174 512 A2 bekannten Rührspule weisen die Spulenanordnungen jeweils eine Induktionsspule auf. Über die Details der Ansteuerung der Spulenanordnungen finden sich keine näheren Ausführungen. Es sind mindestens zwei Segmente vorhanden, die über eine Verstelleinrichtung an den Metallstrang angestellt und von ihm entfernt werden können. Diese Rührspule ist insofern von Vorteil, als sie insbesondere für Umbauten geöffnet und vom Strang abgestellt (= zurückgezogen) werden kann. Auch bei dieser Rührspule wird der Metallstrang im an den Metallstrang angestellten Zustand jedoch vollständig bzw. nahezu vollständig umschlossen. Auch diese Rührspule muss daher entsprechend groß dimensioniert werden, um im an den Metallstrang angestellten Zustand die anderen Elemente der Stranggießanlage nicht zu behindern. Während des stationären Gießbetriebs der Stranggießanlage sind die beiden Segmente der Rührspule - so wie in den Figuren 1, 3, 7, 8 und 11 dargestellt - geschlossen, sodass ein bauartbedingter Abstand der Segmente zum Strang gegeben ist. Nur bei Notfällen werden die Segmente geöffnet, wodurch eine Beschädigung der Rührspule verhindert werden soll. Eine Anstellung der geschlossenen Segmente zur Minimierung des Abstands zum Strang ist nicht möglich.

Aus der WO 2007/073 863 A1 - inhaltsgleich mit der korrespondierenden US 2008/0 251 231 A1 - ist eine Rührspule für eine Stranggießanlage bekannt, mittels derer in einer Gießrichtung ein Metallstrang gegossen wird. Der Metallstrang weist ein I-Profil auf. Die Rührspule kann zwei Segmente aufweisen, die den Metallstrang in einer orthogonal zur Gießrichtung verlaufenden Schnittebene gesehen jeweils über einen Teilumfang umgeben. Sie weisen jeweils mehrere Spulenanordnungen auf, die in der Schnittebene gesehen sequenziell aufeinanderfolgen. Die Segmente sind C- oder E-förmig ausgebildet.

Rührspulen, die wie der Stator einer linearen Asynchronmaschine wirken, sind in der Regel auf relativ einfache Weise sowohl an den Metallstrang anstellbar als auch von ihm weg bewegbar. Weiterhin sind sie oftmals auf relativ einfache Weise entlang des Metallstranges verfahrbar. Sie rühren den flüssigen Kern jedoch nur in Gießrichtung. Die Vorteile eines Rührens um eine in Gießrichtung verlaufende Achse herum können mit derartigen Rührspulen nicht erreicht werden.

Aus der CN 201 405 047 Y ist eine C-förmige Rührspule für eine Stranggießanlage bekannt. Die Rührspule weist einen Eisenkern, eine Spule und einen Kühlwasserkanal auf.

Die Aufgabe der vorliegenden Erfindung besteht darin, Gegenstände zu schaffen, mittels derer zum einen ein Rühren des flüssigen Kerns des gegossenen Metallstranges um eine in Gießrichtung verlaufende Achse herum ermöglicht wird, wobei jedoch zum anderen eine einfache Anstellbarkeit an den Metallstrang und eine einfache Verfahrbarkeit entlang des Metallstranges möglich sein soll.

Die Aufgabe wird durch eine Rührspule für eine Stranggießanlage mit den Merkmalen des Anspruchs 1 gelöst. Vorteilhafte Ausgestaltungen der erfindungsgemäßen Rührspule sind Gegenstand der abhängigen Ansprüche 2 bis 5.

Erfindungsgemäß wird eine Rührspule der eingangs genannten Art dadurch ausgestaltet,
- dass in dem Fall, dass die Anzahl n an Segmenten gleich 1 ist, das Segment sich, bezogen auf einen Mittelpunkt des Teilkreisbogens, über einen Winkel erstreckt, der zwischen 135° und 225° liegt, insbesondere zwischen 150° und 210°, und
- dass in dem Fall, dass die Anzahl n an Segmenten größer als 1 ist, die Segmente sich, bezogen auf einen Mittelpunkt des jeweiligen Teilkreisbogens, über einen Winkel erstrecken, der zwischen 180°/n und 270°/n liegt, wobei n die Anzahl an Segmenten ist.

Insbesondere wurde erkannt, dass mittels eines einzigen Segments im Metallstrang zwar nur auf einen Teil des noch flüssigen Kerns des Metallstranges Kräfte ausgeübt werden können. Die Kräfte wirken jedoch (zumindest im wesentlichen) mit einem hinreichenden Abstand von der Mittelachse des gegossenen Metallstranges und in der orthogonal zur Gießrichtung verlaufenden Schnittebene. Bereits mit einem einzigen Segment kann daher im flüssigen Kern eine Rotation des flüssigen Kerns um die Strangachse erzeugt werden. Der Winkelbereich von 135° bis 225° bewirkt, dass der flüssige Kern des Metallstranges effizient in Rotation um die Strangachse versetzt werden kann, obwohl nur ein einziges Segment vorhanden ist. Dennoch kann insbesondere das Segment gut an den Metallstrang angestellt und auch von ihm entfernt werden.

In dem alternativen Fall, dass die Anzahl n an Segmenten größer als 1 ist und die Segmente sich, bezogen auf einen Mittelpunkt des jeweiligen Teilkreisbogens, über einen Winkel erstrecken, der zwischen 180°/n und 270°/n liegt, werden eine gute Anstellbarkeit an den Metallstrang und eine gute Überdeckung des Metallstrangs über einen weiten Bereich von Gießformaten miteinander kombiniert.

Die Segmente sind vorzugsweise mittels einer jeweiligen Antriebseinrichtung positionsgesteuert oder positionsgeregelt an den Metallstrang anstellbar. Die Antriebseinrichtungen können insbesondere als elektrische Antriebe oder Hydraulikzylindereinheiten ausgebildet sein. Es ist möglich, dass das Anstellen an den Metallstrang eine Schwenkbewegung ist. Vorzugsweise erfolgt die Anstellung jedoch rein radial.

Vorzugsweise weist die Rührspule eine Verfahreinrichtung auf, mittels derer die Rührspule in Gießrichtung verfahrbar ist. Durch diese Ausgestaltung kann insbesondere die Rührspule nach Bedarf entlang des Metallstranges verfahren und positioniert werden.

In vielen Fällen ist die Stranggießanlage als Bogenanlage ausgebildet. In diesem Fall sind vorzugsweise auch die Segmente in Gießrichtung gesehen gebogen. Dadurch kann der Abstand des Segments bzw. der Segmente vom Metallstrang minimiert werden.

In einer besonders bevorzugten Ausgestaltung der vorliegenden Erfindung weisen die Spulenanordnungen jeweils mehrere Induktionsspulen auf, die in Gießrichtung gesehen übereinander angeordnet sind. Dadurch ist es jedoch möglich, die Rührspule zusätzlich zum ersten Betriebsmodus in einem zweiten Betriebsmodus zu betreiben. Der Betrieb im ersten bzw. im zweiten Betriebsmodus erfolgt selbstverständlich zu verschiedenen Zeiten.

Die Aufgabe wird weiterhin durch eine Stranggießanlage mit den Merkmalen des Anspruchs 6 gelöst. Erfindungsgemäß wird eine Stranggießanlage der eingangs genannten Art dadurch ausgestaltet, dass die Rührspule erfindungsgemäß ausgebildet ist.

Die erfindungsgemäße Rührspule ist besonders dann gut einsetzbar, wenn der Metallstrang einen Strangquerschnitt aufweist, der mit einem Knüppel, einem Vorblock oder einem Vorprofil korrespondiert. Als Knüppel wird hierbei ein Metallstrang mit einem rechteckigen Querschnitt mit einer Seitenlänge von 80 x 80 mm bis zu 200 x 200 mm bzw. einem runden Querschnitt mit einem Durchmesser zwischen 80 und 200 mm bezeichnet. Als Vorblock oder Vorprofil wird ein Metallstrang mit einem rechteckigen Querschnitt mit einer Seitenlänge von 150 x 150 mm und mehr bzw. einem runden Querschnitt mit einem Durchmesser von 150 mm und mehr bezeichnet. Oftmals beträgt der Querschnitt im Falle eines rechteckigen Querschnitts bis zu 350 x 350 mm und im Falle eines runden Querschnitts ebenfalls bis zu 350 mm. In Einzelfällen sind aber auch größere Seitenlängen bzw. Durchmesser - in seltenen Einzelfällen bis zu 1000 mm oder darüber - möglich. Prinzipiell ist die erfindungsgemäße Rührspule aber auch bei einem anderen Strangquerschnitt - insbesondere einem polygonalen Querschnitt oder einem Brammenquerschnitt - anwendbar.

Die Aufgabe wird durch ein Betriebsverfahren für eine Rührspule für eine Stranggießanlage mit den Merkmalen des Anspruchs 8 gelöst. Vorteilhafte Ausgestaltungen des erfindungsgemäßen Betriebsverfahrens sind Gegenstand der abhängigen Ansprüche 9 und 10.

Erfindungsgemäß wird eine Rührspule der eingangs genannten Art derart betrieben,
- dass die Spulenanordnungen der Segmente im Betrieb mit Wechselströmen beaufschlagt werden,
- dass die Wechselströme, bezogen auf das jeweilige Segment, eine einheitliche Frequenz aufweisen und
- dass in einem ersten Betriebsmodus der Rührspule die Wechselströme, bezogen auf die jeweilige einheitliche Frequenz, derart gegeneinander phasenversetzt sind, dass die Wechselströme der Spulenanordnungen des jeweiligen Segments in dem Metallstrang ein jeweiliges magnetisches Wanderfeld generieren, dessen jeweilige Wanderrichtung innerhalb des jeweiligen Segments einheitlich ist und in der Schnittebene verläuft, so dass ein Rühren eines flüssigen Kerns des Metallstrangs um ein in Gießrichtung verlaufendes Rotationszentrum erfolgt.

Wenn die Anzahl n an Segmenten größer als 1 ist, besteht eine vorteilhafte Ausgestaltung darin, dass das von den Spulenanordnungen eines der Segmente im ersten Betriebsmodus generierte magnetische Wanderfeld gegensinnig zu dem von den Spulenanordnungen eines anderen der Segmente im ersten Betriebsmodus generierten Wanderfeldes wandert und/oder im ersten Betriebsmodus die Beaufschlagung der Spulenanordnungen des einen Segments mit ihren Wechselströmen unkoordiniert zu der Beaufschlagung der Spulenanordnungen des anderen Segments mit ihren Wechselströmen erfolgt. Durch die gegensinnige Ansteuerung der beiden Segmente kann erreicht werden, dass sich im flüssigen Kern eine Strömung einstellt, die ähnlich den Feldlinien eines magnetischen Dipols verläuft. Ein derartiger Betrieb bewirkt insbesondere eine gute Durchmischung auch des flüssigen Kerns im unmittelbaren Bereich der Strangachse. In dem alternativen Fall, dass im ersten Betriebsmodus die Beaufschlagung der Spulenanordnungen des einen Segments mit ihren Wechselströmen unkoordiniert zu der Beaufschlagung der Spulenanordnungen des anderen Segments mit ihren Wechselströmen erfolgt, vereinfacht sich die Ansteuerung der Spulenanordnungen. Beispielsweise können die Spulenanordnungen der verschiedenen Segmente mit unterschiedlichen Frequenzen oder willkürlicher Phasenlage relativ zueinander mit ihren jewei ligen Wechselströmen beaufschlagt werden. Es reicht aus, wenn die Spulenanordnungen jedes Segments jeweils für sich ein magnetisches Wanderfeld generieren. Es ist sogar möglich, beispielsweise eines der Segmente stets gleich zu betreiben und bei dem anderen Segment die Betriebsweise von Zeit zu Zeit zu wechseln, beispielsweise zwischen gleichsinnigem und gegensinnigem Generieren des magnetischen Wanderfeldes hin und her zu schalten.

Wenn die Spulenanordnungen jeweils mehrere Induktionsspulen aufweisen, die in Gießrichtung gesehen übereinander angeordnet sind, werden die Induktionsspulen der jeweiligen Spulenanordnung im ersten Betriebsmodus gleichphasig mit ihrem jeweiligen Wechselstrom beaufschlagt. Zusätzlich ist es jedoch möglich, die Rührspule in einem zweiten Betriebsmodus zu betreiben. In diesem Fall werden die Induktionsspulen der jeweiligen Spulenanordnung im zweiten Betriebsmodus relativ zueinander phasenversetzt mit ihrem jeweiligen Wechselstrom beaufschlagt. Dadurch kann - beispielsweise - bei Bedarf alternativ ein Linearrührer realisiert werden oder sogar ein Rühren realisiert werden, das eine lineare Komponente und eine rotatorische Komponente aufweist. Der Betrieb im ersten bzw. im zweiten Betriebsmodus erfolgt selbstverständlich zu verschiedenen Zeiten.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Stranggießanlage,
- FIG 2: einen Abschnitt der Stranggießanlage von FIG 1,
- FIG 3: einen Schnitt längs eine Linie III-III in FIG 1,
- FIG 4 bis 9: den Schnitt von FIG 3 mit verschiedenen Gießformaten eines Metallstranges,
- FIG 10: eine Rührspule und von der Rührspule auf einen flüssigen Kern eines Metallstranges ausgeübte Kräfte,
- FIG 11: eine sich ergebende Rotationsbewegung des flüssigen Kerns eines Metallstranges,
- FIG 12 und 13: mögliche Ausgestaltungen eines Segments,
- FIG 14: ein Segment in abgerollter Darstellung,
- FIG 15 und 16: mögliche Ausgestaltungen zweier Segmente,
- FIG 17 bis 19: zu den FIG 4 bis 6 analoge Darstellungen bei einer Rührspule mit zwei Segmenten und
- FIG 20: eine sich ergebende Rotationsbewegung des flüssigen Kerns eines Metallstranges.

Gemäß FIG 1 weist eine Stranggießanlage eine Kokille 1 und eine Strangführung 2 auf. Die Strangführung 2 ist der Kokille 1 nachgeordnet. In die Kokille 1 wird flüssiges Metall 3 gegossen, das innerhalb der Kokille 1 zu einer Strangschale 4 mit einem (noch) flüssigen Kern 5 erstarrt. Bei dem Metall 3 kann es sich insbesondere um Stahl handeln. Ein aus Strangschale 4 und flüssigem Kern 5 bestehender Metallstrang 6 wird mittels der Strangführung 2 aus der Kokille 1 in einer Gießrichtung x abgezogen und in der Strangführung 2 intensiv gekühlt. Die Strangschale 4 wird dadurch immer dicker und hiermit korrespondierend der flüssige Kern 5 immer kleiner, bis der Metallstrang 6 vollständig durcherstarrt ist. Der Metallstrang 6 weist vorzugsweise einen Strangquerschnitt auf, der mit einem Knüppel, einem Vorblock oder einem Vorprofil korrespondiert.

Die Stranggießanlage könnte als Vertikalanlage ausgebildet sein. Gemäß FIG 1 ist die Stranggießanlage jedoch als Bogenanlage ausgebildet. Aufgrund der Ausbildung als Bogenanlage verläuft die Gießrichtung x zunächst anfangs vertikal, ändert sich jedoch nach und nach immer weiter, bis die Gießrichtung x horizontal verläuft. Die Gießrichtung x ist also nicht eine einmal statisch bestimmte Richtung, sondern bezieht sich jeweils lokal entlang des gegossenen Metallstranges 6 auf die momentane Bewegungsrichtung des Metallstranges 6.

Die Stranggießanlage weist weiterhin (mindestens) eine Rührspule 7 auf. Die Rührspule 7 kann im Bereich der Kokille 1 angeordnet sein. In diesem Fall ist die Rührspule 7 als Kokillenspule (MEMS = mold electromagnetic stirrer) ausgebildet. Alternativ kann die Rührspule 7, wie in FIG 1 in gestrichelten Linien dargestellt, im Bereich der Strangführung 2 angeordnet sein. In diesem Fall ist die Rührspule 7 als Strangspule (SEMS = strand electromagnetic stirrer) oder als Endspule (FEMS = final electromagnetic stirrer) ausgebildet. Es ist möglich, dass die Rührspule 7 in Gießrichtung x gesehen ortsfest angeordnet ist. Vorzugsweise jedoch weist die Rührspule 7 eine Verfahreinrichtung 8 (siehe FIG 2) auf, mittels derer die Rührspule 7 in Gießrichtung x verfahrbar ist. Die Verfahrbarkeit ist in den FIG 1 und 2 durch einen mit A bezeichneten Doppelpfeil angedeutet.

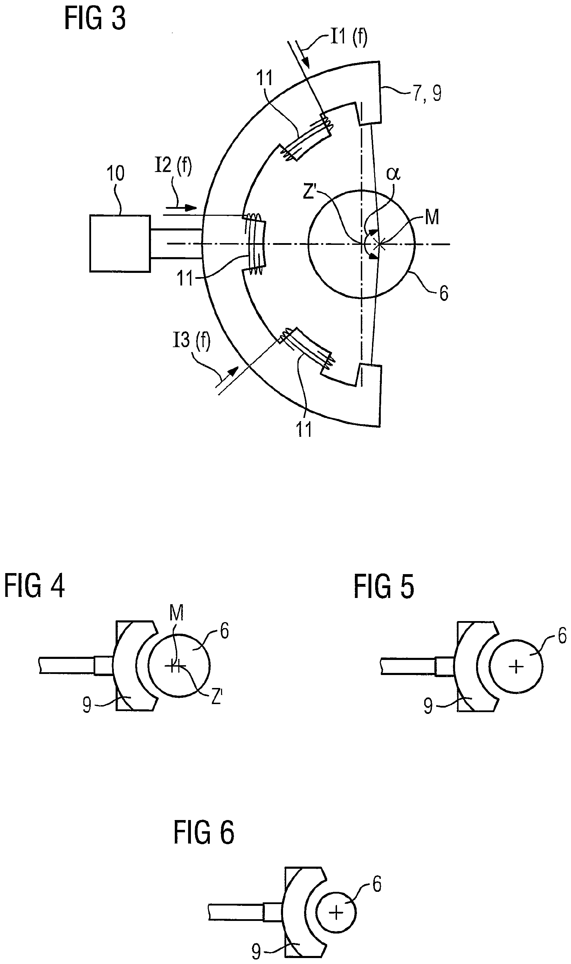

Die Rührspule 7 weist gemäß den weiteren FIG eine Anzahl von Segmenten 9 auf. Es ist möglich und sogar bevorzugt, dass nur ein einziges Segment 9 vorhanden ist. Nachstehend werden daher zunächst in Verbindung mit den FIG 3 bis 14 Ausgestaltungen der Rührspule 7 erläutert, bei denen die Rührspule 7 nur ein einziges Segment 9 aufweist.

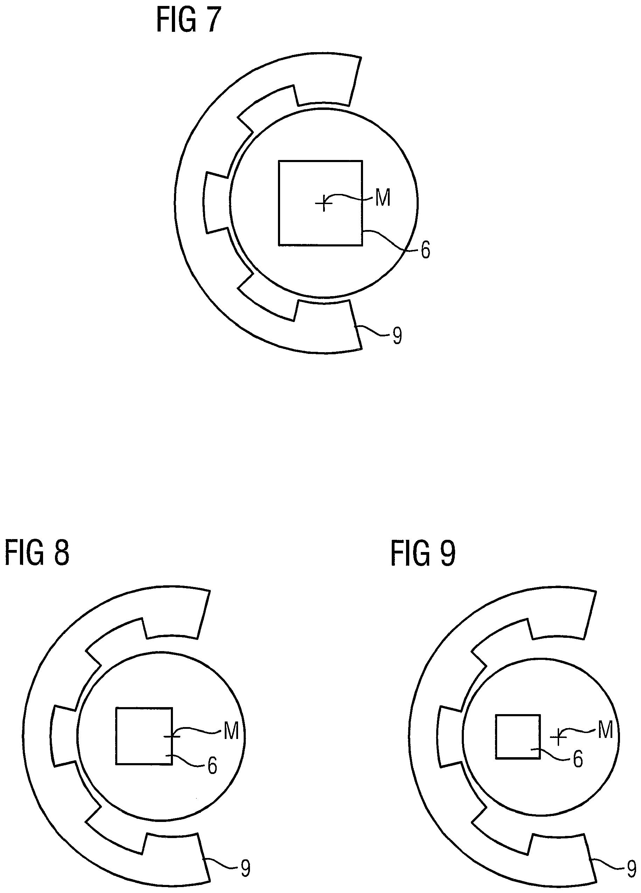

FIG 3 zeigt einen Schnitt orthogonal zur Gießrichtung x. Gemäß FIG 3 umgibt das Segment 9 den Metallstrang 6 über einen Teilumfang. Es ist daher möglich, das Segment 9 mittels einer Antriebseinrichtung 10 positionsgesteuert an den Metallstrang 6 heran zu fahren. Dadurch kann der Abstand des Segments 9 vom Metallstrang 6 minimal gehalten werden. Dies gilt - siehe ergänzend die Figuren 4 bis 6 - unabhängig vom Format bzw. Querschnitt des Metallstranges 6. Insbesondere zeigen die FIG 4 bis 6 unterschiedliche Gießformate von beispielsweise 200, 500 und 650 mm Durchmesser. In allen drei Fällen kann das Segment 9 nahezu optimal an den Metallstrang 6 angestellt werden. Insbesondere ist das Segment 9 vorzugsweise als Teilkreisbogen ausgebildet. Das Segment 9 erstreckt sich somit, bezogen auf einen Mittelpunkt M des Teilkreisbogens, über einen Winkel a. Ein Minimalwert für den Winkel α von 135° sollte nicht unterschritten werden, um eine effiziente Rührwirkung zu gewährleisten. Um weiterhin auch für größere Strangquerschnitte eine optimale Anstellbarkeit an den Metallstrang 6 zu gewährleisten, sollte weiterhin ein Maximalwert für den Winkel α von 225° nicht überschritten werden. Der Winkel α liegt somit vorzugsweise im Bereich von etwa 180° ± 45°, besser im Bereich von etwa 180° ± 30°. Die entsprechenden Ausführungen gelten nicht nur für einen runden Querschnitt des Metallstranges 6, sondern entsprechend den Darstellungen der FIG 7 bis 9 auch für einen rechteckigen Querschnitt des Metallstranges 6.

Das Segment 9 weist gemäß FIG 3 mehrere Spulenanordnungen 11 auf. Minimal weist das Segment 9 drei Spulenanordnungen 11 auf. Es können aber auch mehr als drei Spulenanordnungen 11 vorhanden sein, beispielsweise 4, 5, 6 oder auch noch mehr Spulenanordnungen 11. Die Spulenanordnungen 11 folgen in der Schnittebene gesehen sequenziell aufeinander. Die Spulenanordnungen 11 werden mit Wechselströmen I1, I2, I3 beaufschlagt. Die Anzahl an Wechselströmen I1, I2, I3 beträgt mindestens drei. Die Anzahl von drei Wechselströmen I1, I2, I3 ist auch dann ausreichend, wenn das Segment 9 mehr als drei Spulenanordnungen 11 aufweist und die Anzahl an Spulenanordnungen 11 kein ganzzahliges Vielfaches von 3 ist. Die Wechselströme I1, I2, I3 weisen eine einheitliche Frequenz f auf. Die Frequenz f liegt typischerweise bei der Netzfrequenz von 50 Hz bzw. 60 Hz oder darunter. Sie kann beispielsweise zwischen 3 Hz und 20 Hz liegen.

Die Rührspule 7 ist (zumindest) in einem ersten Betriebsmodus betreibbar. In diesem Betriebsmodus sind die Wechselströme I1, I2, I3 gegeneinander phasenversetzt. Bei einer n-phasigen Speisung beträgt der Phasenversatz der Wechselströme I1, I2, I3 360°/n elektrisch. Insbesondere im Fall einer dreiphasigen Speisung beträgt der Phasenversatz der Wechselströme I1, I2, I3 relativ zueinander somit 120° elektrisch. Der Phasenversatz ist daher völlig analog zu dem Fall, dass mittels einer den Metallstrang 6 vollständig umgebenden Rührspule in dem Metallstrang 6 ein magnetisches Drehfeld generiert würde. Aufgrund des Umstands, dass das Segment 9 den Metallstrang 6 nur teilweise umgibt, ist das mittels der Spulenanordnungen 11 generierte Magnetfeld jedoch - analog zu einem elektrischen Linearantrieb - ein magnetisches Wanderfeld. Die Wanderrichtung des magnetischen Wanderfeldes ist innerhalb des Segments 9 einheitlich. Sie verläuft jedoch - ebenso wie es bei einem magnetischen Drehfeld der Fall wäre - in der Schnittebene.

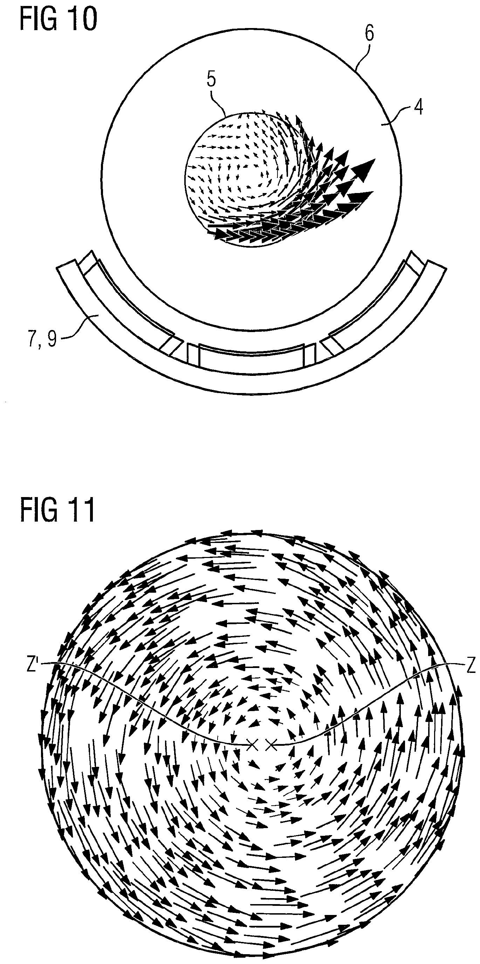

Aufgrund der - bezogen auf den Metallstrang 6 - asymmetrischen Einwirkung des magnetischen Wanderfeldes wirken auf den flüssigen Kern 5 entsprechend auch asymmetrische Kräfte. FIG 10 zeigt beispielhaft für einen runden Metallstrang 6 und einen runden, noch flüssigen Kern 5 eine Verteilung der wirkenden Kräfte, die anhand einer mathematischen Modellierung ermittelt wurde. Trotz der asymmetrischen Einwirkung auf den flüssigen Kern 5 ergibt sich jedoch entsprechend der Darstellung in FIG 11 eine nahezu symmetrische Rotation des gesamten Kerns 5. Das Rotationszentrum Z des flüssigen Kern 5 liegt zwar geringfügig außerhalb des Zentrums Z' des Metallstranges 6. Dies stellt jedoch keinen Nachteil, sondern tendenziell eher einen Vorteil dar, da auch eine Bewegung im Bereich des Zentrums Z' des flüssigen Kerns 5 erfolgt.

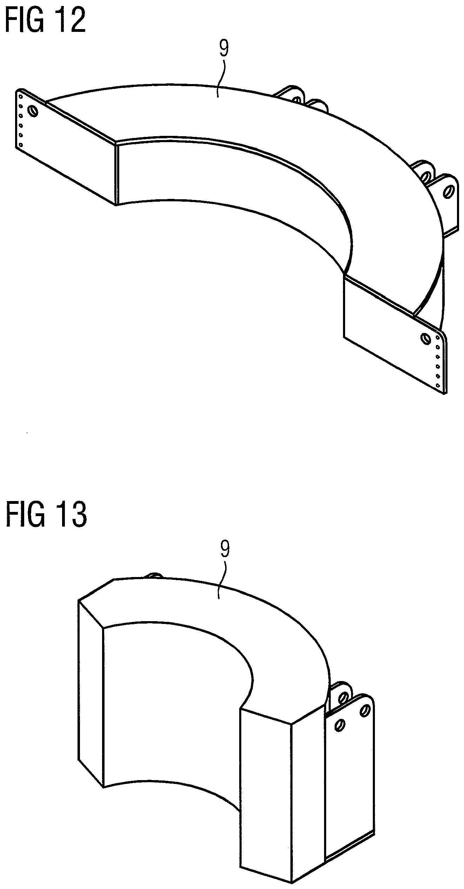

Es ist möglich, dass das Segment 9 in Gießrichtung x gesehen entsprechend der Darstellung in FIG 12 eine relativ geringe Bauhöhe aufweist. Alternativ ist es entsprechend der Darstellung in FIG 13 möglich, dass das Segment 9 in Gießrichtung x gesehen eine relativ große Bauhöhe aufweist. Insbesondere in diesem Fall ist das Segment 9 vorzugsweise an die Art der Stranggießanlage angepasst. Insbesondere ist in diesem Fall das Segment 9 in Gießrichtung x gesehen gebogen, wenn die Stranggießanlage als Bogenanlage ausgebildet ist. Im Falle einer Vertikalanlage ist dies selbstverständlich nicht erforderlich.

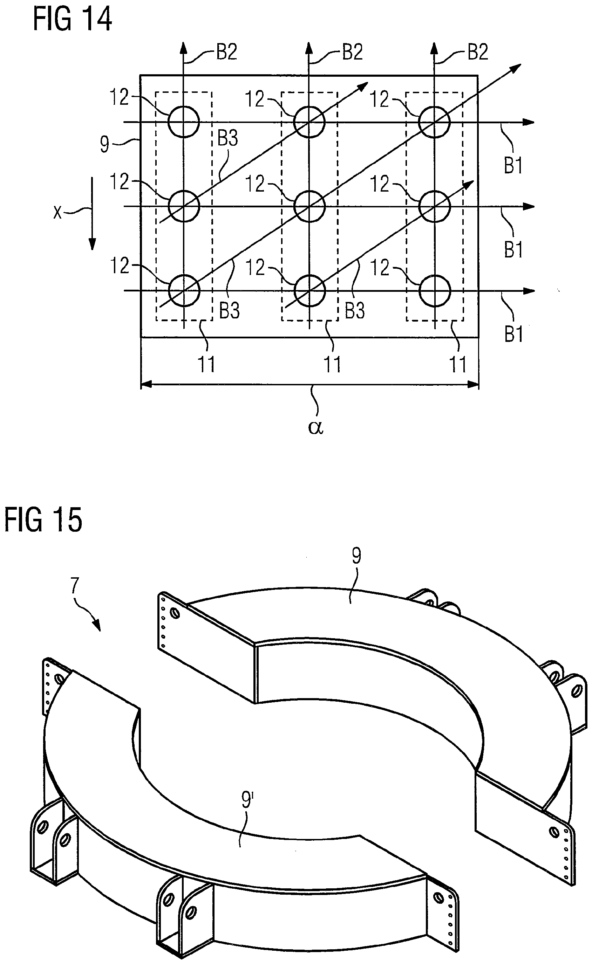

Es ist möglich, dass die Spulenanordnungen 11 jeweils nur eine einzige Induktionsspule 12 aufweisen. Alternativ ist es entsprechend der Darstellung in FIG 14 jedoch ebenso möglich, dass die Spulenanordnungen 11 jeweils mehrere Induktionsspulen 12 aufweisen. Die Induktionsspulen 12 der jeweiligen Spulenanordnung 11 sind in diesem Fall in Gießrichtung x gesehen übereinander angeordnet. Über die Gesamtheit der Spulenanordnungen 11 des Segments 9 gesehen bilden die Induktionsspulen 12 also eine zweidimensionale Matrix.

Wie bereits erwähnt, ist die Rührspule 7 zumindest im ersten Betriebsmodus betreibbar. Falls die Spulenanordnungen 11 mehrere Induktionsspulen 12 aufweisen, werden die Induktionsspulen 12 der jeweiligen Spulenanordnung 11 im ersten Betriebsmodus gleichphasig mit ihrem jeweiligen Wechselstrom I1, I2, I3 beaufschlagt. In diesem Fall ergibt sich eine Wanderrichtung des magnetischen Wanderfeldes entsprechend den in FIG 14 mit B1 bezeichneten Pfeilen. Im Falle mehrerer Induktionsspulen 12 pro Spulenanordnung 11 ist es jedoch möglich, dass die Rührspule 7 zusätzlich zum ersten Betriebsmodus in (mindestens) einem zweiten Betriebsmodus betreibbar ist. Im zweiten Betriebsmodus werden die Induktionsspulen 12 der jeweiligen Spulenanordnung 11 relativ zueinander phasenversetzt mit ihrem jeweiligen Wechselstrom I1, I2, I3 beaufschlagt.

So ist es beispielsweise möglich, diejenigen Induktionsspulen 12 der Spulenanordnungen 11, die in Gießrichtung x gesehen die gleiche Höhenlage aufweisen, im zweiten Betriebsmodus gleichphasig mit ihrem jeweiligen Wechselstrom I1, I2, I3 zu beaufschlagen. In diesem Fall ergibt sich eine Wanderrichtung des magnetischen Wanderfeldes entsprechend den in FIG 14 mit B2 bezeichneten Pfeilen. Im Ergebnis realisiert das Segment 9 dadurch einen Linearrührer. Es ist sogar möglich, dass im zweiten Betriebsmodus sowohl die Induktionsspulen 12 der jeweiligen Spulenanordnung 11 relativ zueinander phasenversetzt mit ihrem jeweiligen Wechselstrom I1, I2, I3 beaufschlagt werden als auch die Spulenanordnungen 11 relativ zueinander phasenversetzt angesteuert werden. In diesem Fall ergibt sich eine Wanderrichtung des magnetischen Wanderfeldes beispielsweise entsprechend den in FIG 14 mit B3 bezeichneten Pfeilen. Dies entspricht einem simultanen Rühren sowohl um das Rotationszentrum Z herum als auch in Gießrichtung x.

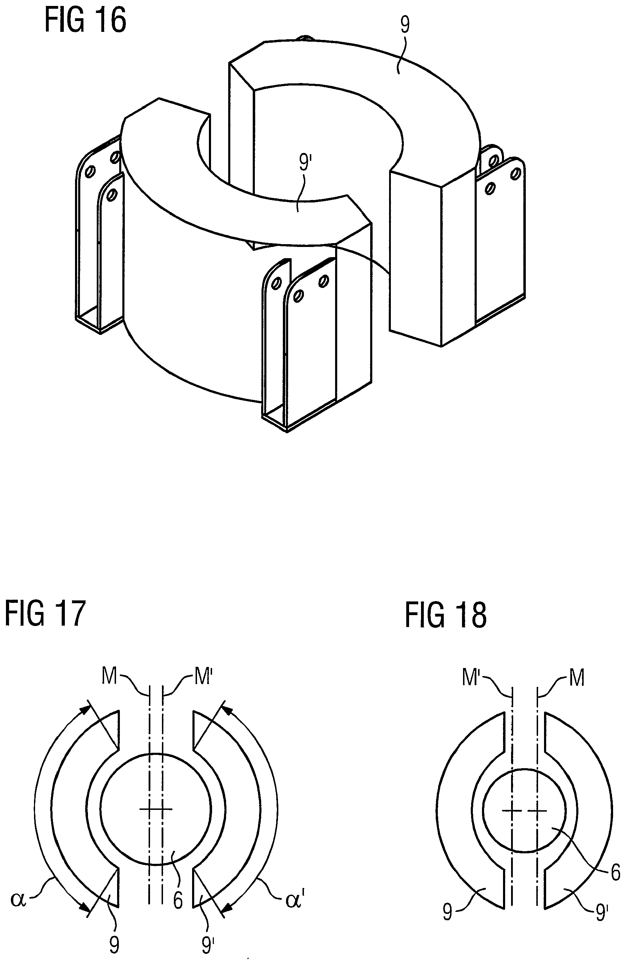

Nachfolgend werden in Verbindung mit den FIG 15 bis 19 Ausgestaltungen der Rührspule 7 erläutert, bei denen die Rührspule 7 zusätzlich zu dem Segment 9 mindestens ein weiteres Segment 9' aufweist. Die Segmente 9, 9' können so weit wie möglich baugleich sein. Auch für die Ausgestaltungen mit mehreren Segmenten 9, 9' gelten die obenstehend in Verbindung mit der Ausgestaltung der Rührspule 7 mit nur einem einzigen Segment 9 erläuterten Prinzipien, nämlich
- dass die Segmente 9, 9' den Metallstrang 6 in einer orthogonal zur Gießrichtung x verlaufenden Schnittebene gesehen jeweils über einen Teilumfang umgeben,
- dass die Segmente 9, 9' jeweils mehrere Spulenanordnungen 11, 11' aufweisen, die in der Schnittebene gesehen sequenziell aufeinanderfolgen,
- dass die Spulenanordnungen 11, 11' der Segmente 9, 9' mit Wechselströmen I1, I2, I3, I1', I2', I3' beaufschlagt werden,
- dass im ersten Betriebsmodus der Rührspule 7 die Wechselströme I1, I2, I3, I1', I2', I3' derart gegeneinander phasenversetzt sind, dass die Wechselströme I1, I2, I3, I1', I2', I3' der Spulenanordnungen 11, 11' des jeweiligen Segments 9, 9' in dem Metallstrang 6 ein jeweiliges magnetisches Wanderfeld generieren, dessen Wanderrichtung in der Schnittebene verläuft,
- dass die Segmente 9, 9' vorzugsweise mittels einer jeweiligen Antriebseinrichtung 10, 10' an den Metallstrang 6 anstellbar sind und
- dass die Segmente 9, 9' vorzugsweise in Gießrichtung x gesehen gebogen sind, sofern die Stranggießanlage als Bogenanlage ausgebildet ist.

Nachfolgend werden daher lediglich die Unterschiede und die zusätzlichen Möglichkeiten näher erläutert, die sich durch die Verwendung von mehreren Segmenten 9, 9' ergeben.

So sind die Segmente 9, 9' so wie zuvor erläutert ebenfalls vorzugsweise jeweils als Teilkreisbogen ausgebildet. Im Falle mehrerer Segmente 9, 9' erstrecken sich die Segmente 9, 9' jedoch, bezogen auf den jeweiligen Mittelpunkt M, M' des jeweiligen Kreisbogens, über Winkel a, a', die zwischen 180°/n und 270°/n liegen, wobei n die Anzahl an Segmenten 9, 9' ist.

Weiterhin können auch im Falle mehrerer Segmente 9, 9' die Spulenanordnungen 11, 11' jeweils mehrere Induktionsspulen 12, 12' aufweisen, die in Gießrichtung x gesehen übereinander angeordnet sind. In diesem Fall sind weiterhin bezüglich des weiteren Segments 9' die gleichen Betriebsmoden möglich, die obenstehend für das Segment 9 erläutert wurden.

Vor allem aber ergeben sich durch die Verwendung mehrerer Segmente 9, 9' erweiterte Möglichkeiten bei der Generierung der Magnetfelder, mittels derer die Rührwirkung erzielt wird.

Im einfachsten Fall ist es möglich, eine gleichartige und koordinierte Beaufschlagung der Spulenanordnungen 11, 11' mit ihren Wechselströmen I1, I2, I3, I1', I2', I3' vorzunehmen. In diesem Fall ergibt sich eine nahezu gleichartige Beaufschlagung wie bei einer vollständig geschlossenen, den Metallstrang 6 umgebenden Rührspule. Zusätzlich ist es jedoch bereits im ersten Betriebsmodus möglich, verschiedene Variationen vorzunehmen.

So ist es beispielsweise möglich, die Frequenz f, f' der Wechselströme I1, I2, I3, I1', I2', I3' individuell für das jeweilige Segment 9, 9' zu bestimmen. Beispielsweise kann die eine Frequenz f bei 5 Hz liegen, die andere Frequenz f' bei 8 Hz. Innerhalb des jeweiligen Segments 9, 9' ist die jeweilige Frequenz f, f' jedoch einheitlich. Somit ist auch der Phasenversatz der Spulenanordnungen 11, 11' relativ zueinander und - soweit gegeben - der Phasenversatz der Induktionsspulen 12, 12' relativ zueinander für das jeweilige Segment 9, 9' auf die jeweilige Frequenz f, f' bezogen.

Alternativ oder zusätzlich ist es möglich, dass das von den Spulenanordnungen 11 des einen Segments 9 generierte magnetische Wanderfeld gegensinnig zu dem von den Spulenanordnungen 11' des anderen Segments 9' generierten Wanderfeldes wandert.

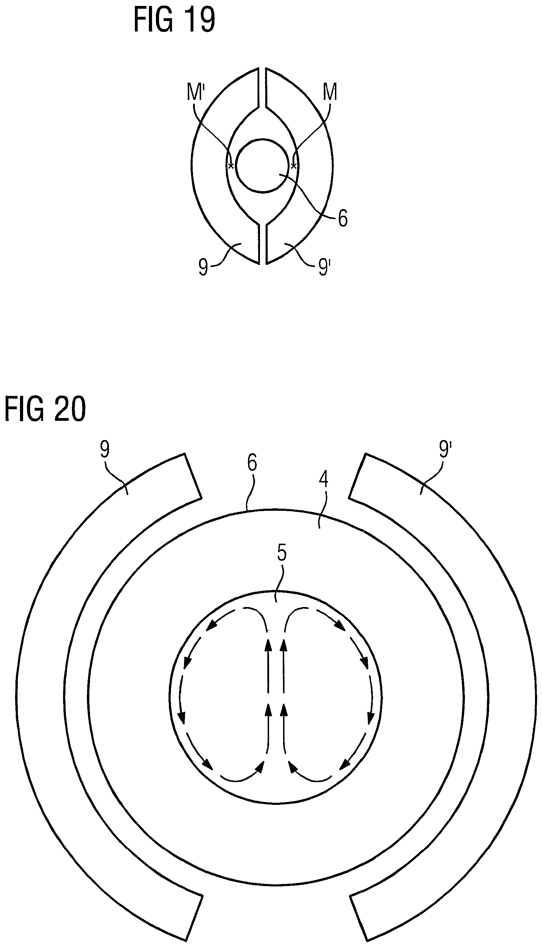

Dadurch ergibt sich eine Rührwirkung, wie sie schematisch in FIG 20 dargestellt ist. Insbesondere der Mittelbereich des flüssigen Kerns 5 wird dadurch gut gerührt.

Alternativ oder zusätzlich ist es möglich, dass die Beaufschlagung der Spulenanordnungen 11 des einen Segments 9 mit ihren Wechselströmen I1, I2, I3 unkoordiniert zu der Beaufschlagung der Spulenanordnungen 11' des anderen Segments 9' mit ihren Wechselströmen I1', I2', I3' erfolgt. Dies betrifft zum einen den bereits erwähnten Fall der Beaufschlagung mit Wechselströmen I1, I2, I3, I1', I2', I3' unterschiedlicher Frequenzen f, f'. Aber auch die Amplituden der Wechselströme I1, I2, I3, I1', I2', I3' und eventuell auch die Phasenlagen der Wechselströme I1, I2, I3 der Spulenanordnungen 11 des einen Segments 9 relativ zu den Wechselströmen I1', I2', I3' der Spulenanordnungen 11' des anderen Segments 9' können unkoordiniert festgelegt werden.

Es ist sogar möglich, eine zeitliche Abfolge der Betriebsweisen festzulegen, auf welche die Segmente 9, 9' jeweils betrieben werden. Beispielsweise können zunächst beide Segmente 9, 9' koordiniert ein Rühren im Uhrzeigersinn bewirken, dann kann das Segment 9' auf ein Rühren entgegen dem Uhrzeigersinn umgeschaltet werden, dann kann zusätzlich auch das Segment 9 auf ein Rühren entgegen dem Uhrzeigersinn umgeschaltet werden und schließlich das Segment 9' auf ein Rühren im Uhrzeigersinn umgeschaltet werden. Danach kann die Abfolge von neuem beginnen. Selbstverständlich sind aber auch andere Abfolgen möglich.

In analoger Weise ist in dem Fall, dass die Segmente 9, 9' Spulenanordnungen 11, 11' mit jeweils mehreren Induktionsspulen 12, 12' aufweisen, die in Gießrichtung x gesehen übereinander angeordnet sind, ein gleichgerichteter oder ein gegenläufiger Betrieb der Induktionsspulen 12, 12' der Spulenanordnungen 11, 11' der beiden Segmente 9, 9' möglich. Es ist sogar möglich, eines der beiden Segmente 9, 9' im ersten Betriebsmodus zu betreiben und das andere Segment 9', 9 im zweiten Betriebsmodus zu betreiben. Auch ist es möglich, den Betriebsmodus der beiden Segmente 9, 9' von Zeit zu Zeit zu ändern.

Die vorliegende Erfindung weist viele Vorteile auf. Bei Verwendung nur des Segments 9 ergibt sich ein kompakter, flexibler Aufbau der Rührspule 7, der nahezu unabhängig vom Gießformat in effizienter Weise ein Rühren um die Strangachse herum ermöglicht. Weiterhin ist die Konstruktion der Rührspule 7 einfach und ist die Rührspule 7 flexibel und auch in einfacher Weise an den Metallstrang 6 anstellbar. Wenn die Spulenanordnungen 11 des Segments 9 jeweils mehrere Induktionsspulen 12 aufweisen, die in Gießrichtung x übereinander angeordnet sind, ergibt sich darüber hinaus ein sehr flexibler Betrieb der Rührspule 7. Bei Verwendung mehrerer Segmente 9, 9' können zusätzliche Variationen beim Rühren bewirkt werden, insbesondere alternativ ein gleichsinniges und ein gegensinniges Rühren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Kokille
- 2: Strangführung
- 3: flüssiges Metall
- 4: Strangschale
- 5: flüssiger Kern
- 6: Metallstrang
- 7: Rührspule
- 8: Verfahreinrichtung
- 9, 9': Segmente
- 10, 10': Antriebseinrichtungen
- 11, 11': Spulenanordnungen
- 12, 12': Induktionsspulen

- A: Doppelpfeil
- B1, B2, B3: Pfeile
- f, f': Frequenzen
- I1, I2, I3: Wechselströme
- I1', I2', I3': Wechselströme
- M, M': Mittelpunkte
- x: Gießrichtung
- Z, Z': Zentren

- α, α': Winkel

## Patentansprüche

1. Rührspule in einer Stranggießanlage, mittels derer in einer Gießrichtung (x) ein Metallstrang (6) gegossen wird,
- wobei die Rührspule eine Anzahl n von Segmenten (9, 9') aufweist, die den Metallstrang (6) in einer orthogonal zur Gießrichtung (x) verlaufenden Schnittebene gesehen jeweils über einen Teilumfang umgeben,
- wobei die Segmente (9, 9') jeweils mehrere Spulenanordnungen (11, 11') aufweisen, die in der Schnittebene gesehen sequenziell aufeinanderfolgen,
- wobei die Segmente (9, 9') jeweils als Teilkreisbogen ausgebildet sind,
**dadurch gekennzeichnet,**
- **dass** in dem Fall, dass die Anzahl n an Segmenten (9, 9') gleich 1 ist, das Segment (9) sich, bezogen auf einen Mittelpunkt (M) des Teilkreisbogens, über einen Winkel (a) erstreckt, der zwischen 135° und 225° liegt, insbesondere zwischen 150° und 210°, und
- **dass** in dem Fall, dass die Anzahl n an Segmenten (9, 9') größer als 1 ist, die Segmente (9, 9') sich, bezogen auf einen Mittelpunkt (M, M') des jeweiligen Teilkreisbogens, über einen Winkel (α, α') erstrecken, der zwischen 180°/n und 270°/n liegt, wobei n die Anzahl an Segmenten (9, 9') ist.

2. Rührspule nach Anspruch 1,
**dadurch gekennzeichnet,**
**dass** ein Abstand zwischen einem Segment (9, 9') und dem Metallstrang (6) mittels einer Antriebseinrichtung (10, 10') gesteuert oder geregelt einstellbar ist.

3. Rührspule nach Anspruch 1 oder 2,
**dadurch gekennzeichnet,**
**dass** die Rührspule eine Verfahreinrichtung (8) aufweist, mittels derer die Rührspule in Gießrichtung (x) verfahrbar ist.

4. Rührspule nach Anspruch 1, 2 oder 3,
**dadurch gekennzeichnet,**
**dass** die Stranggießanlage als Bogenanlage ausgebildet ist und dass die Segmente (9, 9') in Gießrichtung (x) gesehen gebogen sind.

5. Rührspule nach einem der obigen Ansprüche,
**dadurch gekennzeichnet,**
**dass** die Spulenanordnungen (11, 11') jeweils mehrere Induktionsspulen (12, 12') aufweisen, die in Gießrichtung (x) gesehen übereinander angeordnet sind.

6. Stranggießanlage,
- wobei die Stranggießanlage eine Kokille (1) und eine der Kokille (1) nachgeordnete Strangführung (2) aufweist,
- wobei die Stranggießanlage weiterhin eine Rührspule (7) nach einem der obigen Ansprüche aufweist, die im Bereich der Kokille (1) und/oder der Strangführung (2) angeordnet ist.

7. Stranggießanlage nach Anspruch 6,
**dadurch gekennzeichnet,**
**dass** der Metallstrang (6) einen Strangquerschnitt aufweist, der mit einem Knüppel, einem Vorblock oder einem Vorprofil korrespondiert.

8. Betriebsverfahren für eine Rührspule (7) nach einem der Ansprüche 1 bis 5,
**dadurch gekennzeichnet,**
- **dass** die Spulenanordnungen (11, 11') der Segmente (9, 9') im Betrieb mit Wechselströmen (I1, I2, I3, I1', I2', I3') beaufschlagt werden,
- **dass** die Wechselströme (I1, I2, I3, I1', I2', I3'), bezogen auf das jeweilige Segment (9, 9'), eine einheitliche Frequenz (f, f') aufweisen und
- **dass** in einem ersten Betriebsmodus der Rührspule (7) die Wechselströme (I1, I2, I3, I1', I2', I3'), bezogen auf die jeweilige einheitliche Frequenz (f, f'), derart gegeneinander phasenversetzt sind, dass die Wechselströme (I1, I2, I3, I1', I2', I3') der Spulenanordnungen (11, 11') des jeweiligen Segments (9, 9') in dem Metallstrang (6) ein jeweiliges magnetisches Wanderfeld generieren, dessen jeweilige Wanderrichtung innerhalb des jeweiligen Segments (9, 9') einheitlich ist und in der Schnittebene verläuft, so dass ein Rühren eines flüssigen Kerns (5) des Metallstrangs (6) um ein in Gießrichtung (x) verlaufendes Rotationszentrum (Z) erfolgt.

9. Betriebsverfahren nach Anspruch 8,
**dadurch gekennzeichnet,**
**dass** die Anzahl n an Segmenten (9, 9') größer als 1 ist und dass das von den Spulenanordnungen (11, 11') eines der Segmente (9, 9') im ersten Betriebsmodus generierte magnetische Wanderfeld gegensinnig zu dem von den Spulenanordnungen (11, 11') eines anderen der Segmente (9, 9') im ersten Betriebsmodus generierten Wanderfeldes wandert und/oder im ersten Betriebsmodus die Beaufschlagung der Spulenanordnungen (11) des einen Segments (9) mit ihren Wechselströmen (I1, I2, I3) unkoordiniert zu der Beaufschlagung der Spulenanordnungen (11') des anderen Segments (9') mit ihren Wechselströmen (I1', I2', I3') erfolgt.

10. Betriebsverfahren nach Anspruch 8 oder 9,
**dadurch gekennzeichnet,**
- **dass** die Rührspule (7) gemäß Anspruch 5 ausgebildet ist,
- **dass** die Induktionsspulen (12, 12') der jeweiligen Spulenanordnung (11, 11') im ersten Betriebsmodus gleichphasig mit ihrem jeweiligen Wechselstrom (I1, I2, I3, I1', I2', I3') beaufschlagt werden und
- **dass** die Rührspule (7) zusätzlich zum ersten Betriebsmodus in einem zweiten Betriebsmodus betreibbar ist, in dem die Induktionsspulen (12, 12') der jeweiligen Spulenanordnung (11, 11') relativ zueinander phasenversetzt mit ihrem jeweiligen Wechselstrom (I1, I2, I3, I1', I2', I3') beaufschlagt werden.

## Claims

1. Stirring coil in a continuous casting installation, by means of which a metal strand (6) is cast in a casting direction (x),
- wherein the stirring coil has a number n of segments (9, 9'), which in each case surround the metal strand (6) over a partial circumference when viewed in a sectional plane running orthogonally to the casting direction (x),
- wherein the segments (9, 9') have in each case a number of coil assemblies (11, 11'), which follow one another sequentially when viewed in the sectional plane,
- wherein the segments (9, 9') are in each case formed as partial circular arcs,
**characterized**
- **in that**, in the case where the number n of segments (9, 9') is equal to 1, the segment (9) extends, with respect to a central point (M) of the partial circular arc, over an angle (α) which lies between 135° and 225°, in particular between 150° and 210°, and
- **in that**, in the case where the number n of segments (9, 9') is greater than 1, the segments (9, 9') extend, with respect to a central point (M, M') of the respective partial circular arc, over an angle (α, α') which lies between 180°/n and 270°/n, where n is the number of segments (9, 9').

2. Stirring coil according to Claim 1,
**characterized**
**in that** a distance between a segment (9, 9') and the metal strand (6) can be set by means of a driving device (10, 10') in an open-loop or closed-loop controlled manner.

3. Stirring coil according to Claim 1 or 2,
**characterized**
**in that** the stirring coil has a displacing device (8), by means of which the stirring coil can be displaced in the casting direction (x).

4. Stirring coil according to Claim 1, 2 or 3,
**characterized**
**in that** the continuous casting installation is formed as a curved installation and in that the segments (9, 9') are curved when viewed in the casting direction (x).

5. Stirring coil according to one of the above claims,
**characterized**
**in that** the coil assemblies (11, 11') have in each case a number of induction coils (12, 12'), which are arranged one above the other when viewed in the casting direction (x).

6. Continuous casting installation,
- wherein the continuous casting installation has a mould (1) and a strand guide (2) arranged downstream of the mould (1),
- wherein the continuous casting installation also has a stirring coil (7) according to one of the above claims, which is arranged in the region of the mould (1) and/or the strand guide (2).

7. Continuous casting installation according to Claim 6,
**characterized**
**in that** the metal strand (6) has a strand cross section which corresponds to a billet, a bloom or a preliminary section.

8. Operating method for a stirring coil (7) according to one of Claims 1 to 5,
**characterized**
- **in that** during operation alternating currents (I1, I2, I3, I1', 12', 13') are applied to the coil assemblies (11, 11') of the segments (9, 9'),
- **in that** the alternating currents (I1, I2, I3, I1', I2', 13') have a uniform frequency (f, f'), with respect to the respective segment (9, 9'), and
- **in that**, in a first operating mode of the stirring coil (7), the alternating currents (I1, 12, 13, I1', I2', 13') are out of phase in relation to one another, with respect to the respective uniform frequency (f, f'), in such a way that the alternating currents (I1, 12, 13, I1', 12', 13') of the coil assemblies (11, 11') of the respective segment (9, 9') generate in the metal strand (6) a respective travelling magnetic field, the respective travelling direction of which within the respective segment (9, 9') is uniform and extends in the sectional plane, so that stirring of a liquid core (5) of the metal strand (6) takes place about a centre of rotation (Z) extending in the casting direction (x).

9. Operating method according to Claim 8,
**characterized**
**in that** the number n of segments (9, 9') is greater than 1 and in that the travelling magnetic field generated by the coil assemblies (11, 11') of one of the segments (9, 9') in the first operating mode travels in the opposite direction to the travelling field generated by the coil assemblies (11, 11') of another of the segments (9, 9') in the first operating mode and/or, in the first operating mode, the application of the respective alternating currents (I1, 12, 13) to the coil assemblies (11) of the one segment (9) takes place uncoordinated with the application of the respective alternating currents (I1', I2', I3') to the coil assemblies (11') of the other segment (9').

10. Operating method according to Claim 8 or 9,
**characterized**
- **in that** the stirring coil (7) is formed according to Claim 5,
- **in that** the respective alternating current (I1, I2, I3, I1', I2', I3') is applied to the induction coils (12, 12') of the respective coil assembly (11, 11') in phase in the first operating mode and
- **in that**, in addition to the first operating mode, the stirring coil (7) can be operated in a second operating mode, in which the respective alternating current (I1, I2, I3, I1', I2', I3') is applied to the induction coils (12, 12') of the respective coil assembly (11, 11') out of phase in relation to one another.

## Revendications

1. Bobine d'agitation dans une installation de coulée continue, au moyen de laquelle une barre métallique (6) est coulée dans une direction de coulée (x),
- la bobine d'agitation comprenant un nombre n de segments (9, 9') qui, vus dans un plan de coupe s'étendant orthogonalement à la direction de coulée (x), entourent la barre métallique (6) respectivement sur un pourtour partiel,
- les segments (9, 9') comprenant respectivement plusieurs ensembles de bobines (11, 11') qui, vus dans le plan de coupe, se succèdent séquentiellement,
- les segments (9, 9') étant respectivement conçus en arc de cercle,
**caractérisée**
- **en ce que**, dans le cas où le nombre n de segments (9, 9') est égal à 1, le segment (9) s'étend, par rapport à un point médian (M) de l'arc de cercle, sur un angle (α) qui est compris entre 135° et 225°, en particulier entre 150° et 210°, et
- **en ce que**, dans le cas où le nombre n de segments (9, 9') est supérieur à 1, les segments (9, 9') s'étendent, par rapport à un point médian (M, M') de l'arc de cercle respectif, sur un angle (α, α') qui est compris entre 180°/n et 270°/n, n étant le nombre de segments (9, 9').

2. Bobine d'agitation selon la revendication 1,
**caractérisée**
**en ce qu'**une distance entre un segment (9, 9') et la barre métallique (6) est ajustable de manière commandée ou régulée au moyen d'un dispositif d'entraînement (10, 10').

3. Bobine d'agitation selon la revendication 1 ou 2,
**caractérisée**
**en ce que** la bobine d'agitation comprend un dispositif de déplacement (8), au moyen duquel la bobine d'agitation est déplaçable dans la direction de coulée (x).

4. Bobine d'agitation selon la revendication 1, 2 ou 3,
**caractérisée**
**en ce que** l'installation de coulée continue est conçue en tant que margeur et en ce que les segments (9, 9'), vus dans la direction de coulée (x), sont courbés.

5. Bobine d'agitation selon l'une des revendications précédentes,
**caractérisée**
**en ce que** les ensembles de bobines (11, 11') comprennent respectivement plusieurs bobines d'induction (12, 12') qui, vues dans la direction de coulée (x), sont disposées les unes sur les autres.

6. Installation de coulée continue,
- l'installation de coulée continue comprenant une lingotière (1) et un guidage de barre (2) disposé en aval de la lingotière (1),
- l'installation de coulée continue comprenant en outre une bobine d'agitation (7) selon l'une des revendications précédentes, laquelle est disposée dans la zone de la lingotière (1) et/ou du guidage de barre (2).

7. Installation de coulée continue selon la revendication 6,
**caractérisée**
**en ce que** la barre métallique (6) présente une section transversale de barre qui correspond à une billette, un bloom ou un profilé préliminaire.

8. Procédé de fonctionnement pour une bobine d'agitation (7) selon l'une des revendications 1 à 5,
**caractérisé**
- **en ce que** les ensembles de bobines (11, 11') des segments (9, 9') sont soumis en cours de fonctionnement à des courants alternatifs (I1, I2, I3, I1', I2', I3'),
- **en ce que** les courants alternatifs (I1, I2, I3, I1', I2', I3'), par rapport au segment (9, 9') respectif, présentent une fréquence unitaire (f, f') et
- **en ce que**, dans un premier mode de fonctionnement de la bobine d'agitation (7), les courants alternatifs (I1, I2, I3, I1', I2', I3'), par rapport à la fréquence unitaire (f, f') respective, sont déphasés les uns par rapport aux autres de telle sorte que les courants alternatifs (I1, I2, I3, I1', I2', I3') des ensembles de bobines (11, 11') du segment (9, 9') respectif engendrent dans la barre métallique (6) un champ magnétique glissant respectif, dont la direction de glissement respective à l'intérieur du segment (9, 9') respectif est unitaire et s'étend dans le plan de coupe, de sorte qu'une agitation d'un noyau liquide (5) de la barre métallique (6) s'effectue autour d'un centre de rotation (Z) s'étendant dans la direction de coulée (x).

9. Procédé de fonctionnement selon la revendication 8,
**caractérisé**
**en ce que** le nombre n de segments (9, 9') est supérieur à 1 et en ce que le champ magnétique glissant engendré dans le premier mode de fonctionnement par les ensembles de bobines (11, 11') de l'un des segments (9, 9') glisse en sens inverse par rapport au champ glissant engendré dans le premier mode de fonctionnement par les ensembles de bobines (11, 11') d'un autre des segments (9, 9') et/ou, dans le premier mode de fonctionnement, la soumission des ensembles de bobines (11) dudit segment (9) à leurs courants alternatifs (I1, I2, I3) s'effectue de manière non coordonnée par rapport à la soumission des ensembles de bobines (11') de l'autre segment (9') à leurs courants alternatifs (I1', I2', I3').

10. Procédé de fonctionnement selon la revendication 8 ou 9,
**caractérisé**
- **en ce que** la bobine d'agitation (7) est conçue selon la revendication 5,
- **en ce que** les bobines d'induction (12, 12') de l'ensemble de bobines (11, 11') respectif sont soumises dans le premier mode de fonctionnement en phase à leur courant alternatif (I1, I2, I3, I1', I2', I3') respectif et
- **en ce que** la bobine d'agitation (7), en plus du premier mode de fonctionnement, peut être mise en fonctionnement dans un deuxième mode de fonctionnement dans lequel les bobines d'induction (12, 12') de l'ensemble de bobines (11, 11') respectif sont soumises de manière déphasée les unes par rapport aux autres à leur courant alternatif (I1, I2, I3, I1', I2', I3') respectif.
